# EUROPÄISCHE PATENTSCHRIFT

(11) **EP 1 495 927 B1**
(45) Veröffentlichungstag und Bekanntmachung des Hinweises auf die Patenterteilung: **13.06.2012**
(21) Anmeldenummer: 04015837.0
(22) Anmeldetag: 06.07.2004
(51) Int. Cl.: B60G 17/015, G07C 9/00

(54) **System zur Funktionssteuerung eines Kraftfahrzeugs mit einem Steuergerät und einer Chipkarte, auf der Betriebsparameter und Programmergänzungen des Steuergeräts gespeichert sind, sowie Chipkarte dafür**
System for controlling a function of an automobile vehicle having a control device and a smart card on which operational parameters and program parts for the control device are stored, and smart card therefore
Système de commande des fonctions d'un véhicule automobile comprennant un dispositif de commande et une carte à puce sur laquelle sont mémorisés des paramètres de commande et des parties du programme du dispositif de commande, et carte à puce correspondant

(30) Priorität: 09.07.2003 DE 10330980
(43) Veröffentlichungstag der Anmeldung: 12.01.2005
(73) Patentinhaber: Giesecke & Devrient GmbH, 81677 München (DE)
(72) Erfinder: Liegl, Markus, 83607 Holzkirchen (DE)

(56) Entgegenhaltungen:
- EP-A- 0 456 916
- WO-A-94/26564
- DE-A1- 3 308 803
- DE-A1- 4 340 289
- DE-A1- 19 728 226
- DE-A1- 19 840 484
- DE-A1- 19 850 454

## Beschreibung

Die Erfindung betrifft ein System zur Funktionssteuerung, insbesondere Motorsteuerung und/ oder Fahrwerkssteuerung, bei einem Kraftfahrzeug.

Unter einer Chipkarte im Sinne der Erfindung wird jede Art von einem Kartenkörper mit einem darin integrierten elektronischen Schaltkreis verstanden. Der Kartenkörper der Chipkarte kann in beliebiger geeigneter Form gestaltet sein, insbesondere flach, insbesondere nach ISO 7810 (z.B. ID-1, ID-00, ID-000), oder in Form eines volumigen Körpers, z.B. eines Tokens.

Seit ungefähr Beginn der 1990er Jahre werden Motoren von Kraftfahrzeugen wie z.B. PKWs (Personenkraftwagen) oder LKWs (Lastkraftwagen) oder Motorrädern zunehmend mit einer elektronischen Motorsteuerung, auch Motor-Management, (digitale) Motorelektronik oder Powermanagement genannt, ausgerüstet. Zentraler Bestandteil der Motorsteuerung ist ein Steuergerät mit einem Chip mit einem elektrischen Schaltkreis. In dem Chip ist ein Steuerungsprogramm abgespeichert, durch das unterschiedliche Betriebsparameter des Motors eingestellt, mittels Sensoren gemessen und bei Bedarf geregelt werden, so dass der Motor eine vorbestimmte Motorcharakteristik hat, die dem Steuerungsprogramm und den Betriebsparametern entspricht. Beispielsweise wird durch die elektronische Motorsteuerung die Motorleistung (PS-Zahl bzw. kW-Zahl) eingestellt, indem u.a. die Kraftstoffeinspritzung in die Zylinder des Motors und die Zündung, insbesondere der Zündzeitpunkt, eingestellt werden. Weitere Betriebsparameter, die für die Motorsteuerung verwendet werden können, sind die Motordrehzahl, die Ansaugluftmasse (Masse an Luft, die in die Zylinder gesaugt wird), die Lufttemperatur, die Luftdichte, die Kühlwassertemperatur, die Drosselklappenstellung, die Gaspedalstellung und die Fahrgeschwindigkeit des Kraftfahrzeugs.

Das Steuerungsprogramm für die Motorsteuerung ist in einem Speicher des Chips, beispielsweise in einem EEPROM (electrically erasable programable read only memory) oder in einem Flash-EEPROM abgespeichert.

Die Motorleistung bei einem Kraftfahrzeug mit einer elektronischen Motorsteuerung lässt sich auf besonders einfache Weise durch sogenanntes Chip-Tuning verändern, d.h. erhöhen oder verringern. Hierzu wird beispielsweise der Chip in dem Steuergerät durch einen anderen Chip mit einem anderen Steuerungsprogramm und/ oder anderen Betriebsparametern ausgetauscht. Alternativ wird in den Speicher des Chips ein anderes Steuerungsprogramm geladen, oder zu dem vorhandenen Steuerungsprogramm werden geänderte Betriebsparameter abgespeichert, so dass in jedem Fall die durch das Steuerungsprogramm und die Betriebsparameter bewirkte Motorleistung geändert wird. Dabei muss allerdings sichergestellt sein, dass das Austauschen des Chips bzw. das Ändern oder Nachladen eines neuen Steuerungsprogramms oder geänderter Betriebsparameter nur durch befugte Personen durchgeführt wird. Darüber hinaus dürfen die durchgeführten Änderungen nicht zu einer Überlastung und schließlich Schädigung des Motors führen; andernfalls können die Änderungen dazu führen, dass die Garantie- und Gewährleistungspflichten des Herstellers erlöschen.

Aus Sicherheitsgründen ist es weiter empfehlenswert, bei größeren Veränderungen der Motorleistung die Fahrwerkseigenschaften (Fahrwerksabstimmung) wie z.B. die Dämpfung und Federung des Kraftfahrzeugs an die geänderte Motorleistung anzupassen.

Beim bekannten Chip-Tuning ist in den meisten Fällen eine dauerhafte Erhöhung der Motorleistung vorgesehen. Um das Chip-Tuning durchzuführen, muss entweder der vorhandene Chip mühsam ausgebaut und der neue Chip gleichermaßen mühsam eingebaut werden, oder es ist ein aufwändiges, teures Diagnosegerät erforderlich, mit dem der Speicherinhalt des Chips manipuliert wird. Über geeignete Diagnosegeräte verfügen üblicherweise nur gut ausgestattete Autowerkstätten oder behördliche Technikzentren.

Bei vielen neueren Kraftfahrzeugen ist auch der herkömmliche mechanische Zündschlüssel, der mit einem Zylinderschloss zusammenwirkt, und mit dem der Motor gestartet wird, durch eine Chipkarte, nämlich den elektronischen Zündschlüssel ersetzt, der z.B. induktiv mit der Motorsteuerung koppelbar ist, und mit dem sich der Motor über einen Eingriff in die Motorsteuerung starten lässt. Die äußere Form der Chipkarte (bzw. des Kartenkörpers) ist in diesem Fall i.d.R. so gewählt, dass der elektronische Zündschlüssel äußerlich einem herkömmlichen Zündschlüssel ähnelt.

Bei einigen Fahrzeugmodellen ist zudem das Fahrwerk elektronisch gesteuert, wobei beispielsweise die Federungscharakteristik und/ oder die Dämpfungscharakteristik elektronisch gesteuert sind. Einige Fahrzeugmodelle verfügen beispielsweise über eine Luftfederung, deren Dämpfung, Federweg, Federhärte und ggf. weiteren Federungseigenschaften elektronisch regelbar sind.

Bekannte Anwendungsfälle von weiteren elektronischen Steuerungen in einem Kraftfahrzeug sind die elektronische Wegfahrsperre und die elektronische Begrenzung der Höchstgeschwindigkeit des Kraftfahrzeugs. Weiter ist es bekannt, für unterschiedliche Nutzer eines Kraftfahrzeugs unterschiedlichen Sätze von Parametern für Komforteinstellungen wie Sitzeinstellung, Spiegeleinstellung etc. abzuspeichern, und diese Parameter automatisch einzustellen, wenn der betreffende Nutzer das Fahrzeug in Betrieb nimmt.

Aus der deutschen Patentanmeldung DE 37 40 638 A1 ist ein Fahrzeugsicherungssystem (elektronische Wegfahrsperre) bekannt, das zudem eine Halteridentifikation und eine elektronische Begrenzung der erlaubten Höchstgeschwindigkeit ermöglicht. Nur ein befugter Nutzer kann das Fahrzeug in Betrieb setzen, indem er einen gültigen Code eingibt. Anhand des Codes erkennt das Fahrzeug den befugten Nutzer und stellt z.B. die Sitzeinstellung, die Lenkradneigung, die Spiegelstellung, den zuletzt eingestellten Radiosender oder die Einstellung der Klimaanlage oder die zulässige Höchstgeschwindigkeit so ein, wie es für den betreffenden Nutzer abgespeichert ist.

In dem Fall, wenn mehrere Fahrer, beispielsweise mehrere Familienmitglieder einer Familie, ein einziges Fahrzeug nutzen, oder wenn ein einziges Fahrzeug für unterschiedliche Fahrsituationen genutzt wird, kann es jedoch gewünscht sein, die Motorleistung für die unterschiedlichen Fahrer oder Fahrsituationen individuell unterschiedlich zu halten. Beispielsweise kann es gewünscht sein, dass ein Führerscheinneuling, z.B. die Tochter oder der Sohn der Familie, eine geringere Motorleistung zur Verfügung hat als die übrigen Familienmitglieder, insbesondere falls es sich bei dem Fahrzeug um ein Motorrad handelt. Beispielsweise darf in dieser Hinsicht ein Inhaber eines (deutschen) Motorradführerscheins seit Ende der 1980er Jahre während des ersten Jahres nur Motorräder fahren, deren Motorleistung (PS-Zahl, kW-Zahl) 20 kW nicht übersteigt. Nach Ablauf des Jahres wird der Führerschein auf Antrag und gegen Zahlung einer Gebühr auf einen vollwertigen Motorradführerschein aufgestockt, sofern glaubhaft gemacht wird, dass in diesem Jahr eine Fahrleistung auf dem Motorrad von mindestens 5.000 km absolviert worden ist. Alternativ kann gewünscht sein, dass für Fahrten mit erhöhter Last, z.B. für eine Urlaubsfahrt, bei der ein Wohnwagen oder eine große Menge Gepäck mitgeführt wird, vorübergehend eine höhere Motorleistung zur Verfügung steht. Ähnlich ist es wünschenswert, für unterschiedliliche Fahrsituationen und Fahrer, unterschiedlich, z.B. eher sportlich oder eher komfortabel, abgestimmte Fahrwerke zur Verfügung zu haben. Bislang können diese Ziele nur dadurch mit vertretbarem Aufwand erreicht werden, dass mehrere Kraftfahrzeuge mit unterschiedlichen Motorleistungen (PS-Stärken) bereit gehalten werden. Dies ist teuer. Zudem benötigt jedes der Kraftfahrzeuge einen eigenen Stellplatz.

DE 198 40 484 A1 beschreibt ein System zur Funktionssteuerung nach dem Oberbegriff von Anspruch 1. Genauer beschreibt D1 eine Fahrzeugrechneranordnung mit mehreren Rechnern, darunter einem ersten Rechner zur Verarbeitung fahrzeugspezifischer Informationen, einer mit dem ersten Rechner verbundenen Motorsteuerung, einem Chipkartenleser und einer Chipkarte. Die Chipkarte enthält Betriebsprogramm-Bestandteile zur Aktualisierung und/ oder Ergänzung des Betriebsprogramms eines der Rechner und/ oder anderer Komponenten wie beispielsweise der Motorsteuerung. Einer der Rechner liest die Betriebsprogramm-Bestandteile von der Chipkarte aus und führt sie den betroffenen Komponenten zur Aktualisierung und/ oder Ergänzung des Betriebsprogramms zu.

Aufgabe der Erfindung ist es, ein System zur Funktionssteuerung, insbesondere Motorsteuerung und/ oder Fahrwerkssteuerung, bei einem Kraftfahrzeug zu schaffen, bei dem sich mit geringem Aufwand und auf bequeme Weise die Funktionen des Kraftfahrzeugs, wie die Motorcharakteristik, insbesondere Motorleistung, und/ oder die Fahrwerkscharakteristik (Fahrwerksabstimmung), in großem Umfang beliebig einstellen oder verändern lässt. Insbesondere soll sich die Motorleistung wahlweise dauerhaft oder vorübergehend verändern - insbesondere verringern oder erhöhen - lassen.

Die Aufgabe wird gelöst durch ein System zur Funktionssteuerung, insbesondere Motorsteuerung und/ oder Fahrwerkssteuerung, nach dem unabhängigen Vorrichtungsanspruch 1. Vorteilhafte Ausgestaltungen der Erfindung sind in den abhängigen Ansprüchen angeführt.

Bei dem erfindungsgemäßen System zur Funktionssteuerung, insbesondere Motorsteuerung und/ oder Fahrwerkssteuerung, gemäß dem unabhängigen Anspruch 1 ist in einem Steuergerät mit einem Chip ein Steuerungsprogramm implementiert, das zur Steuerung des Motors des Kraftfahrzeugs unter Verwendung von Betriebsparametern eingerichtet ist. Gemäß der Erfindung weist das System weiter eine Chipkarte auf, in der zumindest ein Teil der Betriebsparameter abgespeichert ist, und die mit dem Steuergerät wieder lösbar elektrisch koppelbar ist, derart, dass im gekoppelten Zustand die Chipkarte die auf ihr abgespeicherten Betriebsparameter dem Steuerungsprogramm bereitstellt, so dass das Steuerungsprogramm auf die von der Chipkarte bereitgestellten Betriebsparameter zugreifen kann, wobei mit dem Steuerungsprogramm und den von der Chipkarte bereitgestellten Betriebsparametern eine der Chipkarte entsprechende vorbestimmte Motorcharakteristik, insbesondere Motorleistung, eingestellt ist. Zusätzlich oder alternativ zu den Betriebsparametern können auf der Chipkarte Programmergänzungen abgespeichert sein. Diese werden, z.B. nach Art von Patches, in das Steuerungsprogramm eingebaut. Dabei wird entweder das im Steuergerät vorhandene Steuerungsprogramm vollständig ausgeführt, d.h. durch die Programmergänzungen "lediglich" ergänzt. Alternativ werden durch die Programmergänzungen Teile des Steuerungsprogramms ersetzt.

Durch das Zusammenspiel von Steuerungsprogramm und angekoppelter Chipkarte wird so eine für die Chipkarte typische Motorcharakteristik, insbesondere Motorleistung, festgesetzt.

Dadurch, dass die Betriebsparameter und/ oder Programmergänzungen auf einer handlichen Chipkarte abgespeichert sind, die mit dem Steuergerät wieder lösbar elektrisch koppelbar ist, lässt sich durch ein einfaches Ankoppeln der Chipkarte eine gewünschte Motorcharakteristik, insbesondere Motorleistung, einstellen. Die Chipkarte kann vom Nutzer des Fahrzeugs bequem mitgeführt werden. Ein unhandliches, teures Diagnosegerät oder ein umständlicher Ausbau des Chips des Steuergeräts sind nicht erforderlich.

Gemäß der Erfindung sind auf der Chipkarte weiter Daten eines elektronischen Führerscheins und/ oder eines elektronischen Fahrzeugscheins und/ oder eines elektronischen Versicherungsscheins für Kraftfahrtversicherung(en), insbesondere Haftpflichtversicherung und/ oder Kaskoversicherung, abgespeichert.

Daher ist gemäß Anspruch 1 ein System zur Motorsteuerung geschaffen, bei dem sich die Motorcharakteristik, insbesondere Motorleistung, mit geringem Aufwand und auf bequeme Weise in großem Umfang beliebig einstellen oder verändern lässt, insbesondere wahlweise dauerhaft oder vorübergehend verändern lässt und/ oder wahlweise erhöhen oder verringern lässt.

Bei Ausführungsformen, bei denen Daten eines elektronischen Versicherungsscheins auf der Chipkarte abgespeichert sind, ist das System vorzugsweise dazu eingerichtet, dass die Versicherungsbedingungen, insbesondere der zu zahlende Versicherungsbeitrag, der Kraftfahrtversicherung in Abhängigkeit vom Betrieb des Steuerungsprogramms mit den Betriebsparametern und/ oder Programmergänzungen von der Chipkarte, automatisch ermittelt werden. Insbesondere werden die Versicherungsbedingungen beispielsweise in Abhängigkeit von der mit dem Kraftfahrzeug absolvierten Fahrleistung ermittelt, falls die Fahrleistung (zurückgelegte Strecke) mit einer bestimmten Motorleistung in die Versicherungsbedingungen (z.B. Versicherungsbeitrag) mit einfließt. Die Fahrleistung (zurückgelegte Strecke) wird dabei vorzugsweise unter Verwendung des Fahrtenschreibers ermittelt. Mit dem System werden somit die Versicherungsbeträge automatisch richtig ermittelt, wodurch der Verwaltungsaufwand für die betroffene Versicherungsgesellschaft und auch für den oder die Fahrzeugnutzer erheblich verringert wird.

Bei Ausführungsformen, bei denen Daten eines elektronischen Führerscheins auf der Chipkarte abgespeichert sind, kann beispielsweise ein beschränkter Führerschein auf Probe nach der erforderlichen Wartezeit auf einen vollwertigen Führerschein aufgestockt werden. In Fällen, wo für ein solches Aufstocken erforderlich ist, dass der Führerscheininhaber mindestens eine vorbestimmte Mindeststrecke mit seinem Kraftfahrzeug zurückgelegt hat, ist vorzugsweise vorgesehen, dass der elektronische Führerschein nach der Wartezeit automatisch einen elektronischen Fahrtenschreiber des Kraftfahrzeugs abfrägt und den beschränkten Führerschein automatisch auf einen vollwertigen Führerschein aufstockt. Beispielsweise wird für einen beschränkten Motorradführerschein, den ein Fahrer nach Bestehen der Fahrprüfung erhält, nach einem Jahr der Fahrtenschreiber abgefragt. Falls die Fahrleistung zu diesem Zeitpunkt mindestens 5000 km beträgt, wird bei dem Führerschein automatisch die Begrenzung der Motorleistung aufgehoben. Bei diesem Verfahren entfallen die Verwaltungsgebühren, die bislang üblicherweise für eine Aufstockung eines beschränkten Führerscheins auf einen vollwertigen Führerschein anfallen. Wahlweise kann, sobald der Führerschein aufgestockt ist, dem Nutzer automatisch eine Berechtigung eingeräumt sein, die Betriebsparameter seiner Chipkarte in begrenztem Umfang zu ändern, und so beispielsweise die Motorleistung seines Kraftfahrzeugs zu erhöhen. Der Umfang der zulässigen Erhöhung kann beispielsweise daran bemessen sein, dass durch die Änderung die erforderlichen Versicherungsbeiträge nicht teurer werden, z.B. durch eine Änderung der Typklasse des Fahrzeugs.

Die Chipkarte kann einen Kartenkörper mit einer beliebigen geeigneten Form haben, der insbesondere flach gestaltet sein kann, insbesondere nach ISO 7810 (z.B. ID-1, ID-00, ID-000), oder alternativ in Form eines volumigen Körpers, z.B. eines Tokens, insbesondere in Form eines Autoschlüssels bzw. Zündschlüssels.

Wahlweise lassen sich mittels der Chipkarte nur die Motorcharakteristik, nur die Fahrwerkscharakteristik (Fahrwerksabstimmung) oder sowohl die Motorcharakteristik als auch die Fahrwerkscharakteristik einstellen oder ändern.

Hierdurch lässt sich durch ein Ankoppeln der Chipkarte z.B. wahlweise eine sportlichere oder eine komfortablere Fahrwerksabstimmung (Fahrwerkscharakteristik, Fahrwerkseigenschaften) einstellen. Alternativ oder zusätzlich lässt sich die Fahrwerksabstimmung auf eine geänderte Motorleistung abstimmen, die z.B. ebenfalls durch Parameter und/ oder Programmergänzungen auf der Chipkarte eingestellt ist. Beispielsweise wird zu einer höheren Motorleistung eine straffere Fahrwerksabstimmung bereitgestellt wird, wobei zumindest ein Teil der Parameter und/ oder Programmergänzungen, die zum Einstellen der Motorabstimmung (Motorcharakteristik) und der Fahrwerksabstimmung erforderlich sind, in der Chipkarte abgespeichert sind.

Betriebsparameter für die Fahrwerksabstimmung können z.B. die Dämpfung und/ oder die Federung sein. Bei einer Luftfederung kann z.B. der Luftdruck ein Betriebsparameter sein.

Vorzugsweise sind bei dem System unterschiedliche Motorcharakteristiken und/ oder Fahrwerkscharakteristiken einstellbar. Hierzu weist das System vorzugsweise mehrere unterschiedliche Chipkarten auf, auf denen unterschiedliche Sätze von Betriebsparametern und/ oder Programmergänzungen abgespeichert sind.

Beispielsweise sind bei einem System, bei dem mittels der Chipkarte die Motorcharakteristik einstellbar ist, auf der Chipkarte eines Fahranfängers Betriebsparameter und/ oder Programmergänzungen abgespeichert, durch die eine geringe Motorleistung eingestellt ist. Auf der Chipkarte eine erfahrenen Fahrers sind hingegen Betriebsparameter und/ oder Programmergänzungen abgespeichert, durch die eine höhere Motorleistung eingestellt ist. Jeweils eine Chipkarte ist auf einmal mit dem Steuergerät elektrisch gekoppelt, so dass eine eindeutige Motorcharakteristik eingestellt ist. Wahlweise sind in jeder Chipkarte Betriebsparameter und/ oder Programmergänzungen zum Einstellen oder Ändern der Fahrwerkseigenschaften abgespeichert, die vorzugsweise an die Motorcharakteristik der Chipkarte angepasst sind.

Alternativ sind in unterschiedlichen Chipkarten Betriebsparameter und/oder Programmergänzungen für unterschiedliche Fahrwerkseigenschaften abgespeichert, wobei die Fahrwerkseigenschaften unabhängig von der Motorsteuerung einstellbar oder änderbar sind. Beispielsweise lässt sich so mit einer ersten Chipkarte eine sportliche Fahrwerksabstimmung einstellen, mit einer zweiten Chipkarte hingegen eine komfortable Fahrwerksabstimmung.

Die unterschiedlichen Chipkarten sind beispielsweise unterschiedlichen Nutzern des Kraftfahrzeugs zugeordnet, beispielsweise erfahreneren Nutzern und weniger erfahrenen Nutzern. Alternativ sind für unterschiedliche Nutzungszwecke unterschiedliche Chipkarten vorgesehen, beispielsweise eine erste Chipkarte mit einer niedrigeren Motorleistung für den Alltagsgebrauch des Kraftfahrzeugs und eine zweite Chipkarte mit einer höheren Motorleistung für Fahrten unter höherer Nutzlast, beispielsweise, wenn mit dem Kraftfahrzeug ein Anhänger gezogen werden muss. Ein Lastkraftwagen wird beispielsweise bei Leerfahrten, bei denen der Lastwagen leer ist, mit einer ersten Chipkarte mit geringerer Motorleistung betrieben als bei Transportfahrten, bei denen der Lastwagen mit Gütern beladen ist, und für die eine zweite Chipkarte mit höherer Motorleistung verwendet wird. Für Transportfahrten, bei denen der Lastwagen zusätzlich einen beladenen Anhänger zieht, wird beispielsweise eine dritte Chipkarte mit einer noch höheren Motorleistung verwendet.

Die Motorcharakteristik ist in der Regel ebenfalls durch das Steuerungsprogramm selbst beeinflusst. Falls im Chip des Steuergeräts bereits Betriebsparameter abgelegt sind, ergibt sich die Motorcharakteristik vorzugsweise aus dem Zusammenwirken des Steuerungsprogramms, der Betriebsparameter des Steuergeräts und der von der Chipkarte bereitgestellten Betriebsparameter und/ oder Programmergänzungen.

Gemäß einer Ausführungsform der Erfindung greift das Steuerungsprogramm direkt auf die Chipkarte zu, um die dort abgespeicherten Betriebsparameter und/ oder ggf. Programmergänzungen zu nutzen. Diese Ausführungsform ermöglicht einen definierten Betrieb des Steuerungsprogramms nur solange die Chipkarte angekoppelt ist und stellt somit sicher, dass ein Betrieb des Fahrzeugs ohne Chipkarte nicht möglich ist.

Vorzugsweise, gemäß einer weiteren Ausführungsform der Erfindung, weist der Chip des Steuergeräts einen flüchtigen oder nichtflüchtigen Speicher auf, der zum Empfangen und Abspeichern der Betriebsdaten und/ oder Programmergänzungen von der Chipkarte eingerichtet ist, und der so eingerichtet ist, dass das Steuerprogramm zum Betrieb des Motors auf in dem Speicher abgelegte Betriebsparameter und/ oder Programmergänzungen zugreifen kann. Bei dieser Ausführungsform werden, wenn die Chipkarte an das Steuergerät elektrisch angekoppelt wird, die in der Chipkarte gespeicherten Betriebsparameter und/ oder Programmergänzungen in den Speicher des Chips des Steuergeräts geladen. Das Steuerungsprogramm verwendet dann die im Speicher des Steuergeräts abgelegten Betriebsparameter und/ oder Programmergänzungen, um den Motor des Kraftfahrzeugs zu steuern. Diese weitere Ausführungsform hat den Vorteil, dass das Steuerungsprogramm betriebsfähig bleibt, wenn während des Betriebs die Chipkarte entkoppelt wird. Hierdurch ist sichergestellt, dass während des Betriebs des Kraftfahrzeugs, beispielsweise während des Fahrens mit hoher Geschwindigkeit, auch dann kein undefinierter Zustand des Steuerungsprogramms eintritt, wenn die Chipkarte entfernt wird, was andernfalls dazu führen könnte, dass der Fahrer die Kontrolle über das Kraftfahrzeug verliert.

Bei einer ersten Variante ist der Speicher des Steuergeräts ein flüchtiger Speicher, so dass die von der Chipkarte geladenen Betriebsparameter und/ oder Programmergänzungen wieder gelöscht werden, sobald das Steuergerät außer Betrieb genommen wird. Bei jeder erneuten Inbetriebnahme des Steuergeräts muss erneut die Chipkarte angekoppelt werden, um die Betriebsparameter und/ oder Programmergänzungen der Chipkarte in das Steuergerät zu laden. Als flüchtiger Speicher wird in Verbindung mit der Erfindung auch ein an sich nichtflüchtiger Speicher mit Clear On Reset (COR) Eigenschaft angesehen, bei dem also bei jedem Reset der Speicherinhalt gelöscht wird.

Bei einer zweiten Variante ist der Speicher des Steuergeräts ein nichtflüchtiger Speicher, so dass die von der Chipkarte geladenen Betriebsparameter und/ oder Programmergänzungen im Speicher verbleiben, sobald das Steuergerät außer Betrieb genommen wird. Vorzugsweise bei dieser zweiten Variante weist das Steuergerät vorzugsweise eine erste Abfrageeinrichtung auf, mit der die Berechtigung einer angekoppelten Chipkarte überprüfbar ist, die bereits im Steuergerät abgespeicherten Betriebsparameter und/ oder Programmergänzungen zu nutzen. Beispielsweise wird der Betrieb des Steuerungsprograrnms bzw. des Kraftfahrzeugs verhindert, falls die Betriebsparameter und/ oder Programmergänzungen auf der angekoppelten Chipkarte einer niedrigeren Motorleistung entsprechen als die bereits im Steuergerät abgespeicherten Betriebsparameter und/ oder Programmergänzungen, und gewährt, falls die Betriebsparameter und/ oder Programmergänzungen der Chipkarte der gleichen oder einer höheren Motorleistung entsprechen.

Gemäß einer Variante sind in dem Chip des Steuergeräts bereits ein Satz von Grund-Betriebsparametern und ein vollständiges Steuerungsprogramm abgelegt, die einen Betrieb des Motors ermöglichen, ohne dass weitere Betriebsparameter und/ oder Programmergänzungen für die Motorsteuerung und/ oder für die Fahrwerksabstimmung (Einstellung bzw. Steuerung der Fahrwerkscharakteristik) in den Chip geladen werden oder dem Chip anderweitig zur Verfügung gestellt werden, z.B. extern auf der Chipkarte. In diesem Fall wird die Motorcharakteristik durch ein Laden bzw. Bereitstellen von Betriebsparametern und ggf. Programmergänzungen aus der Chipkarte in den Chip des Steuergeräts verändert und/ oder die Fahrwerkscharakteristik durch ein Bereitstellen von Betriebsparametern und ggf. Programmergänzungen aus der Chipkarte in den Chip des Steuergeräts verändert. Ein Betrieb des Motors ist aber auch ohne ein Nachladen von Betriebsparametern und/ oder Programmergänzungen von einer Chipkarte möglich. Bezogen auf die Motorleistung wird dabei beispielsweise in Abhängigkeit von den Werten der Betriebsparameter und/ oder von den Programmergänzungen aus der Chipkarte die Motorleistung gegenüber der Grund-Motorleistung erhöht oder verringert.

Bei dieser Variante weist das System vorzugsweise eine zweite Abfrageeinrichtung auf, die dazu eingerichtet ist, eine Berechtigung der Chipkarte zu überprüfen, mit der Chipkarte das Steuerungsprogramm mit den Grund-Betriebsparametern und dem auf dem Chip des Steuergeräts bereits vorhandenen Steuerungsprogramm zu betreiben. In Abhängigkeit vom Ergebnis der Überprüfung wird entweder, bei einem positiven Ergebnis, d.h. wenn die Chipkarte berechtigt ist, der Betrieb des Steuerungsprogramms mit den Grund-Betriebsparametern erlaubt. Bei einem negativen Ergebnis, d.h. wenn die Chipkarte nicht berechtigt ist, wird die Bereitstellung von Betriebsparametern und/ oder Programmergänzungen durch die Chipkarte gefordert. Dabei werden vorzugsweise in Reaktion auf das negative Ergebnis die Betriebsparameter und/ oder Programmergänzungen der Chipkarte dem Steuerungsprogramm unmittelbar bereit gestellt, z.B. indem die Betriebsparameter und/ oder Programmergänzungen unmittelbar in das Steuergerät geladen werden.

Im Zusammenhang mit der Erfindung können die erste und die zweite Abfrageeinrichtung als zwei gesonderte zweite Abfrageeinrichtungen oder als eine einzige gemeinsame Abfrageeinrichtung gestaltet sein. Bei einer Variante, bei der die Grund-Betriebsparameter und die von der Chipkarte geladenen Betriebsparameter in unterschiedlichen Speichern überprüft werden, sind vorzugsweise zwei gesonderte Abfrageeinrichtungen vorgesehen. Bei einer Variante, wo die Überprüfung im selben Speicher, z.B. in einem Arbeitsspeicher des Chips des Steuergeräts erfolgt, ist vorzugsweise eine einzige Abfrageeinrichtung vorgesehen.

Für die Motorsteuerung und die Fahrwerkssteuerung können entweder ein einziges gemeinsames Steuergerät oder zwei gesonderte Steuergeräte vorgesehen sein. In dem gemeinsamen Steuergerät können entweder ein einziger Chip oder zwei gesonderte Chips für Motor- bzw. Fahrwerkssteuerung vorgesehen sein. Beispielsweise ist ein einziges Steuergerät mit einem einzigen Chip vorgesehen, in dem zwei unterschiedliche Programme vorgesehen sind, ein Programm für die Motorsteuerung und ein Programm für die Fahrwerkssteuerung, und ggf. weitere Programme.

Das System zur Funktionssteuerung, insbesondere Motorsteuerung und/oder Fahrwerkssteuerung, ist vorzugsweise so eingerichtet ist, dass durch ein Ankoppeln der Chipkarte an den Chip des Steuergeräts das Bereitstellen der Betriebsparameter und/ oder Programmergänzungen der Chipkarte an das Steuerungsprogramm unmittelbar bewirkt wird. Falls die Betriebsparameter und/ oder Programmergänzungen in das Steuergerät geladen werden, bedeutet dies insbesondere, dass, sobald die Chipkarte an den Chip des Steuergeräts angekoppelt ist, die Betriebsparameter und/ oder Programmergänzungen in den Chip des Steuergeräts geladen werden.

Bei einer bevorzugten Ausführungsform hat die Chipkarte zugleich die Funktion eines elektronischen Zündschlüssels, mit dem der Motor elektronisch gestartet wird und/ oder ein elektronische Wegfahrsperre freigeschaltet wird. In diesem Fall benötigt der Nutzer des Fahrzeugs zum Bereitstellen seiner persönlichen Betriebsparameter und/ oder Programmergänzungen nur den elektronischen Zündschlüssel, den er zum Betrieb des Kraftfahrzeugs ohnehin benötigt. Weiter vorzugsweise werden die Betriebsparameter und/ oder Programmergänzungen unmittelbar bereitgestellt, insbesondere in den Chip des Steuergeräts geladen, sobald der Nutzer die Zündung betätigt oder den Zündschlüssel an das Zündschloss ansteckt. Gegebenenfalls werden zusammen mit den persönlichen Betriebsparametern und/ oder Programmergänzungen für die Motorsteuerung auch die persönlichen Betriebsparameter und/ oder Programmergänzungen für die Fahrwerksabstimmung bereitgestellt. Alternativ sind jeweils ein sportlicher und ein komfortabler Zündschlüssel vorgesehen, mit sportlichen bzw. komfortablen persönlichen Betriebsparametern und/ oder Programmergänzungen für die Fahrwerksabstimmung, die unabhängig von den Betriebsparametern und/ oder Programmergänzungen für die Motorsteuerung bereitgestellt werden. In diesem Fall wird durch unterschiedliche Zündschlüssel lediglich eine unterschiedliche Fahrwerksabstimmung, z.B. Dämpfung und/ oder Federung, eingestellt. Der Kartenkörper der Chipkarte kann bei dieser Ausführungsform im Wesentlichen jede beliebige Gestalt haben, und hat vorzugsweise eine Gestalt, die auch bei einem elektronischen Zündschlüssel geeignet ist.

Alternativ ist die Chipkarte vom Zündschlüssel gesondert vorgesehen. In diesem Fall ist weiter im oder am Kraftfahrzeug - vorzugsweise im Fahrgastraum des PKWs oder LKWs oder in einem Bereich des Motorrads, den der Fahrer in Fahrposition leicht erreichen kann - ein Chipkarten-Lesegerät vorgesehen, mit dem sich die Chipkarte an das Steuergerät elektrisch ankoppeln lässt. Das Chipkarten-Lesegerät kann insbesondere in einen Geräteschacht eingefügt sein, ähnlich wie dies für Autoradios und Navigationsgeräte üblich ist, so dass es möglichst gut gegen Beschädigung geschützt ist und den Fahrer (Nutzer) möglichst wenig behindert.

Gemäß einer Variante ist die Chipkarte nachladbar, beispielsweise durch eine autorisierte Stelle. Beispielsweise wird für einen Motorradfahrer, dessen Probezeit vorüber ist, und der eine ausreichende Fahrleistung nachweisen kann, der eingeschränkte deutsche Motorradführerschein, der den Betrieb von Motorrädern nur bis zu einer Höchstgrenze an Motorleistung (kW-Zahl. PS-Zahl) erlaubt, auf Antrag auf einen vollwertigen Motorradführerschein ohne Begrenzung der Motorleistung aufgestockt. In diesem Fall ändert die autorisierte Stelle auf Antrag auch die Betriebsparameter und/ oder Programmergänzungen auf der Chipkarte derart, dass die Motorleistung erhöht ist. Damit der Fahrer die Änderung der Betriebsparameter und/ oder Programmergänzungen nicht unzulässigerweise selbst durchführen kann, kann die Änderung erst nach einer erfolgreichen Authentisierung durchgeführt werden, bei der die autorisierte Stelle gegenüber der Chipkarte ihre Berechtigung zur Änderung der Betriebsparameter und/ oder Programmergänzungen nachweist.

Zudem oder alternativ kann vorgesehen sein, dass der Nutzer die Betriebsparameter und/ oder Programmergänzungen in einem begrenzten Umfang selbst ändert. Hierzu hat der Nutzer vorzugsweise eine persönliche Authentisierung, die ihm den entsprechenden Schreibzugriff auf die Chipkarte ermöglicht. Der Umfang der Änderungen, die der Nutzer selbst durchführen kann, kann beispielsweise so bemessen sein, dass sich durch die Änderungen die Versicherungsbedingungen der Haftpflichtversicherung nicht ändern, z.B. weil sich die Typklasse des Kraftfahrzeugs nicht ändert, oder dass sich die Typklasse höchstens derart ändert, dass die mit den Änderungen erforderlichen Versicherungen keinen höheren Versicherungsbeitrag haben.

Wenn bei einem Kraftfahrzeug die Motorleistung verändert wird, kann es unter Umständen sein, dass die Verträge über Kraftfahrtversicherungen wie Haftpflichtversicherungen und Kaskoversicherungen (Teilkasko, Vollkasko), die für das Kraftfahrzeug abgeschlossen sind, an die geänderte Motorleistung angepasst werden müssen. Dies ist zwar nicht in allen Fällen so, allerdings kann sich durch die geänderte Motorleistung z.B. die Typklasse des Kraftfahrzeugs und damit der zu bezahlende Versicherungsbetrag ändern. In diesem Fall kann es beispielsweise gewünscht oder erforderlich sein, die Fahrstrecke oder (gleichbedeutend) Fahrleistung ("Kilometerleistung"), die mit dem versicherten Kraftfahrzeug mit einer bestimmten Motorleistung zurückgelegt worden ist, bei der Berechnung des Versicherungsbeitrags zu berücksichtigen. Ähnlich können sich die Garantiebedingungen, die der Hersteller oder Händler gewährt, für das Kraftfahrzeug ändern, je nachdem, welche Fahrstrecke mit welcher Motorleistung zurückgelegt worden ist, insbesondere der Zeitraum, über den hinweg Garantie besteht. Beispielsweise besteht die Garantie für einen vorbestimmten Zeitraum von z.B. 2 oder 3 Jahren oder eine Fahrleistung von höchstens 100.000 km mit 100 kW und höchstens 80.000 km mit 130 kW, dabei aber insgesamt höchstens 100.000 km. Wenn das Kraftfahrzeug abwechselnd mit mehreren unterschiedlichen Motorleistungen betrieben wird, muss dazu die Fahrleistung aufgeschlüsselt nach eingesetzten Motorleistungen aufgezeichnet werden.

Um eine solche Aufzeichnung der Fahrleistung zu ermöglichen, weist das System vorzugsweise weiter einen elektronischen Fahrtenschreiber auf, der jede Benutzung des Kraftfahrzeugs mit der Chipkarte, insbesondere die mit Verwendung der Chipkarte zurückgelegte Entfernung, detektiert und aufzeichnet. Dabei wird vorzugsweise mit aufgezeichnet, unter welchen Betriebsparametern und/ oder Programmergänzungen, insbesondere mit welcher Motorleistung das Kraftfahrzeug betrieben wird.

In den Fällen, wenn zum Betrieb des Kraftfahrzeugs abwechselnd mehrere unterschiedliche Chipkarten mit unterschiedlichen Betriebsparametern und/oder Programmergänzungen und damit Motorcharakteristiken bzw.-leistungen verwendet werden, wird die Benutzung des Kraftfahrzeugs, insbesondere die Fahrleistung, für jede der mehreren Chipkarten gesondert detektiert und aufgezeichnet, wobei jeweils ausreichend Betriebsparameter und/ oder Programmergänzungen mit aufgezeichnet werden, um zu identifizieren, welche Strecke mit welcher Motorleistung zurückgelegt worden ist. Alternativ kann die Chipkarte eine für sie charakteristische Kennung angeben, durch die die Chipkarte eindeutig identifizierbar ist, und die die Zuordnung der Betriebsparameter und/ oder Programmergänzungen und/oder der Motorleistung zu der Chipkarte erlaubt.

Die vom Fahrtenschreiber aufgezeichneten Daten können wahlweise zusätzlich auf der Chipkarte abgespeichert werden und z.B. bei jeder Nutzung des Kraftfahrzeugs mit der Chipkarte aktualisiert werden.

Weiter können in der Chipkarte ein oder mehrere Einstellparameter zu mindestens einer Einstellung von Funktionen des Kraftfahrzeugs wie z.B. Sitzeinstellung, Lenkradneigung, Spiegelstellung, zuletzt eingestellter Radiosender, Einstellung der Klimaanlage und zulässige Höchstgeschwindigkeit, derart abgespeichert sein, dass bei einer Inbetriebnahme des Kraftfahrzeugs, insbesondere des Motors und/ oder des Steuergeräts, die Einstellparameter zusammen mit den Betriebsparametern und/ oder Programmergänzungen und/ oder ggf. Navigationsparametern der zugehörigen Funktion bereit gestellt werden. In diesem Fall liefert die Chipkarte dem jeweiligen Nutzer seine persönlichen Einstellungen zu den unterschiedlichen Funktionen, z.B. Komforteinstellungen, des Kraftfahrzeugs.

Die Chipkarte und/ oder das Steuergerät (bzw. die mehreren Steuergeräte z.B. für unterschiedliche Funktionalitäten wie Motorsteuerung, Fahrwerksabstimmung etc.) des Systems sind vorzugsweise so eingerichtet, dass ausschließlich die zum selben System und/oder zum selben Kraftfahrzeug gehörigen Chipkarte und Steuergerät zusammen betreibbar sind. Falls mehrere Chipkarten zum System gehören, sind diese mehreren Chipkarten nur mit dem eigenen System bzw. Kraftfahrzeug betreibbar. Auf diese Weise ist z.B. sichergestellt, dass eine Chipkarte nur für dasjenige Fahrzeug verwendet werden kann, für das sie vorgesehen ist. Erreicht wird dies beispielsweise dadurch, dass die Chipkarte und das Steuergerät eine einseitige oder gegenseitige Authentisierung durchführen, bei der sich zumindest die Chipkarte ausweisen muss, dass sie befugt ist, zusammen mit dem Steuergerät das Steuerungsprogramm und somit letzten Endes das Kraftfahrzeug zu betreiben. Wahlweise muss sich das Steuergerät auch gegenüber der Chipkarte authentisieren.

Falls die Chipkarte zugleich die Funktion eines elektronischen Zündschlüssels und/oder Funktionalitäten zum Lösen einer elektronischen Wegfahrsperre implementiert hat, ist in der Chipkarte bereits eine Authentisierungsfunktionalität implementiert, die in diesem Fall vorzugsweise auch zum Sicherstellen, dass das Steuerungsprogramm nur mit systemeigenen Chipkarten betrieben werden kann, verwendet wird.

Die Chipkarte in dem System zur erfindungsgemäßen Motorsteuerung ist vorzugsweise eine Multiapplikations-Smartcard, insbesondere eine Java Card.

Vorzugsweise sind sämtliche erforderlichen Funktionalitäten als gesonderte Anwendungen in der Chipkarte implementiert. Zu den erforderlichen Funktionalitäten können ein oder mehrere der folgenden Funktionalitäten zählen:
- Betriebsparameter und/ oder Programmergänzungen für die Motorsteuerung,
- Betriebsparameter und/ oder Programmergänzungen für die Fahrwerksabstimmung (Einstellung, Änderung der Fahrwerkscharakteristik),
- Parameter und/ oder zumindest Teile eines Programms für die Betätigung einer Zündung und/ oder elektronischen Wegfahrsperre eines Kraftfahrzeugs,
- zumindest Teile einer Abfrageeinrichtung zum Überprüfen der Berechtigung der Chipkarte, auf ein Steuerungsprogramm im Steuergerät für die Motorsteuerung eines Kraftfahrzeugs zuzugreifen,
- Authentisierungsdaten und/ oder Authentisierungsverfahren für Schreibzugriffe auf die Chipkarte zum Ändern insbesondere von in der Chipkarte abgespeicherten Betriebsdaten,
- Authentisierungsdaten und/ oder Authentisierungsverfahren für den Betrieb des Steuerungsprogramms,
- Aufzeichnungsdaten und/ oder Parameter und/ oder zumindest Teile eines Programms eines elektronischen Fahrtenschreibers,
- Aufzeichnungsdaten und/ oder Parameter und/ oder zumindest Teile eines Programms eines elektronischen Führerscheins,
- Aufzeichnungsdaten und/ oder Parameter und/ oder zumindest Teile eines Programms eines elektronischen Versicherungsscheins für eine oder mehrere Kraftfahrtversicherungen, insbesondere Haftpflichtversicherung und Kaskoversicherung,
- Navigationsparameter für ein Navigationsprogramm eines Kraftfahrzeugs und/ oder zumindest Teile eines Navigationsprogramms eines Kraftfahrzeugs,
- einen oder mehrere Einstellparameter zu mindestens einer Einstellung von Funktionen eines Kraftfahrzeugs wie z.B. Sitzeinstellung, Lenkradneigung, Spiegelstellung, zuletzt eingestellter Radiosender, Einstellung der Klimaanlage und zulässige Höchstgeschwindigkeit.

Bei der Java Card sind die Anwendungen beispielsweise als Applikationen oder Applets verwirklicht. Die Ausführung der Chipkarte als Java Card hat den Vorteil, dass die unterschiedlichen Anwendungen besonders gut gegeneinander abgesichert sind, so dass unbefugte Zugriffe einer Anwendung auf eine andere besonders zuverlässig verhindert sind.

Beispielsweise sind die Motorsteuerung, die Fahrwerkssteuerung, der Fahrtenschreiber, der elektronische Führerschein, der elektronische Fahrzeugschein, Authentisierungsverfahren und -parameter zum Betrieb des Steuerungsprogramms, Authentisierungsverfahren und -parameter für Schreibzugriffe auf die Chipkarte und die Komforteinstellungen als gesonderte Applets auf der Chipkarte abgespeichert und mittels Firewalls gegeneinander abgesichert.

## Patentansprüche

1. System zur Funktionssteuerung, Motorsteuerung und/ oder Fahrwerkssteuerung, bei einem Kraftfahrzeug, mit
- mindestens einem Steuergerät mit mindestens einem Chip mit mindestens einem darin implementierten Steuerungsprogramm, das zur Steuerung des Motors des Kraftfahrzeugs unter Verwendung von Betriebsparametern und/ oder zur Steuerung der Fahrwerkseigenschaften, insbesondere Dämpfung und/ oder Federung, des Kraftfahrzeugs unter Verwendung von Betriebsparametern eingerichtet ist, und
- einer Chipkarte, in der zumindest ein Teil der Betriebsparameter und/oder Programmergänzungen abgespeichert sind, und die mit dem Steuergerät wieder lösbar elektrisch koppelbar ist, derart, dass im gekoppelten Zustand die Chipkarte die auf ihr abgespeicherten Betriebsparameter und/ oder Programmergänzungen dem Steuerungsprogramm bereitstellt, so dass das Steuerungsprogramm auf die von der Chipkarte bereitgestellten Betriebsparameter und/ oder Programmergänzungen zugreifen kann,
wobei mit dem Steuerungsprogramm und den von der Chipkarte bereitgestellten Betriebsparametern und/ oder Programmergänzungen eine der Chipkarte entsprechende vorbestimmte Motorcharakteristik, insbesondere Motorleistung, eingestellt ist und/ oder eine der Chipkarte entsprechende vorbestimmte Fahrwerkscharakteristik (Fahrwerksabstimmung), insbesondere Dämpfung und/ oder Federung, eingestellt ist, **dadurch gekennzeichnet, dass** auf der Chipkarte weiter Daten eines elektronischen Führerscheins und/oder eines elektronischen Fahrzeugscheins und/oder eines elektronischen Versicherungsscheins für eine Kraftfahrtversicherung, insbesondere Haftpflichtversicherung und/ oder Kaskoversicherung, abgespeichert sind.

2. System nach Anspruch 1, das eine Mehrzahl von Chipkarten mit unterschiedlichen darin abgespeicherten Betriebsparametern und/ oder Programmergänzungen aufweist, von welchen Chipkarten wahlweise je eine mit dem Steuergerät elektrisch koppelbar ist.

3. System nach Anspruch 1 oder 2, wobei der Chip des Steuergeräts einen flüchtigen oder nichtflüchtigen Speicher aufweist, der zum Empfangen und Abspeichern der Betriebsdaten und/ oder Programmergänzungen von der Chipkarte eingerichtet ist, und der weiter so eingerichtet ist, dass das Steuerprogramm zum Betrieb des Motors und/ oder zur Abstimmung des Fahrwerks auf in dem Speicher abgelegte Betriebsparameter und/ oder Programmergänzungen zugreifen kann.

4. System nach Anspruch 3, das weiter eine erste Abfrageeinrichtung aufweist, die dazu eingerichtet ist, eine Berechtigung der Chipkarte zu überprüfen, mit der Chipkarte das Steuerungsprogramm mit bereits in dem Steuergerät abgespeicherten Betriebsparametern und/ oder Programmergänzungen zu betreiben, und in Abhängigkeit vom Ergebnis der Überprüfung
- entweder, bei einem positiven Ergebnis, den Betrieb des Steuerungsprogramms mit den bereits in dem Steuergerät abgespeicherten Betriebsparametern und/ oder Programmergänzungen zu erlauben
- oder, bei einem negativen Ergebnis, die Bereitstellung von Betriebsparametern und/ oder Programmergänzungen durch die Chipkarte zu fordern, wobei vorzugsweise in Reaktion auf das negative Ergebnis die Betriebsparameter und/ oder Programmergänzungen der Chipkarte dem Steuerungsprogramm bereit gestellt werden.

5. System nach einem der Ansprüche 1 bis 4, wobei in dem Chip des Steuergeräts ein Satz von Grund-Betriebsparametern und ein vollständiges Steuerungsprogramm abgespeichert sind, durch den eine Grund-Motorleistung bzw. Grund-Fahrwerkscharakteristik (-abstimmung) eingestellt ist, und die einen Betrieb des Motors und/ oder des Fahrwerks ohne ein Bereitstellen von Betriebsparametern und/ oder Programmergänzungen mittels der Chipkarte ermöglicht.

6. System nach Anspruch 5, das weiter eine zweite Abfrageeinrichtung aufweist, die dazu eingerichtet ist, eine Berechtigung der Chipkarte zu überprüfen, mit der Chipkarte das Steuerungsprogramm mit den Grund-Betriebsparametern und/ oder mit der Grund-Fahrwerkscharakteristik zu betreiben, und in Abhängigkeit vom Ergebnis der Überprüfung
- entweder, bei einem positiven Ergebnis, den Betrieb des Steuerungsprogramms mit den Grund-Betriebsparametern und/ oder der Grund-Fahrwerkscharakteristik zu erlauben
- oder, bei einem negativen Ergebnis, die Bereitstellung von Betriebsparametern und/ oder Programmergänzungen durch die Chipkarte zu fordern, wobei vorzugsweise in Reaktion auf das negative Ergebnis die Betriebsparameter und/ oder Programmergänzungen der Chipkarte dem Steuerungsprogramm bereit gestellt werden.

7. System nach einem der Ansprüche 1 bis 6, das so eingerichtet ist, dass durch ein Ankoppeln der Chipkarte an den Chip des Steuergeräts das Bereitstellen der Betriebsparameter und/ oder Programmergänzungen der Chipkarte an das Steuerungsprogramm unmittelbar bewirkt wird.

8. System nach einem der Ansprüche 1 bis 7, wobei die Chipkarte zugleich die Funktion eines elektronischen Zündschlüssels hat, mit dem der Motor elektronisch gestartet wird und/ oder eine elektronische Wegfahrsperre freigeschaltet wird.

9. System nach einem der Ansprüche 1 bis 8, wobei die Betriebsparameter und/ oder Programmergänzungen auf der Chipkarte nachladbar sind, wobei vorzugsweise für das Nachladen eine Authentifizierung erforderlich ist.

10. System nach einem der Ansprüche 1 bis 9, das weiter einen elektronischen Fahrtenschreiber aufweist, der so eingerichtet ist, dass er jede Benutzung des Kraftfahrzeugs mit der Chipkarte, insbesondere die mit Verwendung der Chipkarte zurückgelegte Entfernung, detektiert und aufzeichnet, wobei gegebenenfalls vorzugsweise für jede der mehreren Chipkarten die Benutzung gesondert detektiert und aufgezeichnet wird.

11. System nach Anspruch 10, das dazu eingerichtet ist, dass die Versicherungsbedingungen, insbesondere der Versicherungsbeitrag, mindestens einer Kraftfahrtversicherung in Abhängigkeit vom Betrieb des Steuerungsprogramms mit den Betriebsparametern von der Chipkarte, insbesondere in Abhängigkeit von der dabei mit dem Fahrzeug zurückgelegten Strecke, automatisch ermittelt werden.

12. System nach einem der Ansprüche 1 bis 11, wobei weiter in der Chipkarte Navigationsparameter für ein Navigationssystem des Kraftfahrzeugs abgespeichert sind, und wobei das Steuerungsprogramm und das Navigationssystem derart in Wirkverbindung miteinander stehen, dass durch die Navigationsparameter ein der Chipkarte entsprechender räumlicher Aktionsbereich des Kraftfahrzeugs eingestellt ist, der mit dem Kraftfahrzeug nicht verlassen werden kann.

13. System nach einem der Ansprüche 1 bis 12, wobei weiter in der Chipkarte ein oder mehrere Einstellparameter zu mindestens einer Einstellung von Funktionen des Kraftfahrzeugs wie z.B. Sitzeinstellung, Lenkradneigung, Spiegelstellung, zuletzt eingestellter Radiosender, Einstellung der Klimaanlage und zulässige Höchstgeschwindigkeit, derart abgespeichert sind, dass bei einer Inbetriebnahme des Kraftfahrzeugs, insbesondere des Motors und/oder des Steuergeräts, die Einstellparameter zusammen mit den Betriebsparametern und/ oder ggf. Navigationsparametern der zugehörigen Funktion bereit gestellt werden.

14. System nach einem der Ansprüche 1 bis 13, wobei die auf der Chipkarte abgespeicherten Betriebsparameter und/ oder Programmergänzungen für die Motorsteuerung und für die Fahrwerkscharakteristik (Fahrwerksabstimmung) aufeinander abgestimmt sind, insbesondere derart dass, wenn eine höhere Motorleistung eingestellt ist, eine straffere Fahrwerkscharakteristik eingestellt ist.

15. System nach einem der Ansprüche 1 bis 14, wobei die Chipkarte/n und/oder das/ die Steuergerät/ e des Systems so eingerichtet sind, dass ausschließlich die zum selben System und/ oder zum selben Kraftfahrzeug gehörigen Chipkarte/ n und Steuergerät/ e zusammen betreibbar sind, insbesondere dass vor oder bei einer Inbetriebnahme des Systems eine einseitige oder gegenseitige Authentisierung zwischen der Chipkarte und dem Steuergerät erfolgt, bei der zumindest die Chipkarte ihre Befugnis nachweist, dass mit ihr das Steuerungsprogramm des Systems betrieben wird.

16. Chipkarte in einem System zur Funktionssteuerung, insbesondere Motorsteuerung und/ oder Fahrwerkssteuerung, wobei die Chipkarte gemäß einem der Ansprüche 1 bis 15 gestaltet ist.

17. Chipkarte nach Anspruch 16, wobei sämtliche erforderlichen Funktionalitäten als voneinander gesonderte Anwendungen in der Chipkarte implementiert sind, wobei die erforderlichen Funktionalitäten ein oder mehrere der folgenden Funktionalitäten aufweisen:
- Betriebsparameter und/ oder Programmergänzungen für die Motorsteuerung,
- Betriebsparameter und/ oder Programmergänzungen für die Fahrwerksabstimmung, insbesondere Dämpfung und/ oder Federung,
- Parameter und/ oder zumindest Teile eines Programms für die Betätigung einer Zündung und/ oder elektronischen Wegfahrsperre eines Kraftfahrzeugs,
- zumindest Teile einer Abfrageeinrichtung zum Überprüfen der Berechtigung der Chipkarte, auf ein Steuerungsprogramm im Steuergerät für die Motorsteuerung eines Kraftfahrzeugs zuzugreifen,
- Authentisierungsdaten und/ oder Authentisierungsverfahren für Schreibzugriffe auf die Chipkarte zum Ändern insbesondere von in der Chipkarte abgespeicherten Betriebsdaten,
- Authentisierungsdaten und/ oder Authentisierungsverfahren für den Betrieb des Steuerungsprogramms,
- Aufzeichnungsdaten und/ oder Parameter und/ oder zumindest Teile eines Programms eines elektronischen Fahrtenschreibers,
- Aufzeichnungsdaten und/ oder Parameter und/ oder zumindest Teile eines Programms eines elektronischen Führerscheins,
- Aufzeichnungsdaten und/ oder Parameter und/ oder zumindest Teile eines Programms eines elektronischen Fahrzeugscheins,
- Aufzeichnungsdaten und/ oder Parameter und/ oder zumindest Teile eines Programms eines elektronischen Versicherungsscheins für eine oder mehrere Kraftfahrtversicherungen, insbesondere Haftpflichtversicherung und Kaskoversicherung, insbesondere Teilkaskoversicherung oder Vollkaskoversicherung,
- Navigationsparameter für ein Navigationsprogramm eines Kraftfahrzeugs und/ oder zumindest Teile eines Navigationsprogramms eines Kraftfahrzeugs,
- einen oder mehrere Einstellparameter zu mindestens einer Einstellung von Funktionen eines Kraftfahrzeugs wie z.B. Sitzeinstellung, Lenkradneigung, Spiegelstellung, zuletzt eingestellter Radiosender, Einstellung der Klimaanlage und zulässige Höchstgeschwindigkeit.

18. Chipkarte nach Anspruch 16 oder 17, wobei die Chipkarte eine-Multiapplikations-Smartcard ist, insbesondere eine Java Card, wobei insbesondere die Anwendungen als Applikationen oder Applets gestaltet sind.

## Claims

1. A system for function control, engine control and/or chassis control, in an automobile, having
- at least one control unit with at least one chip with at least one control program implemented therein which is adapted for controlling the engine of the automobile employing operating parameters and/or for controlling the chassis properties, in particular damping and/or suspension, of the automobile employing operating parameters, and
- a chip card in which at least a portion of the operating parameters and/or program additions are stored, and which is electrically coupleable in detachable fashion to the control unit, such that in the coupled state the chip card makes the operating parameters and/or program additions stored thereon available to the control program, so that the control program can access the operating parameters and/or program additions made available by the chip card,
whereby with the control program and the operating parameters and/or program additions made available by the chip card there is adjusted a predetermined engine characteristic, in particular engine power, corresponding to the chip card and/or there is adjusted a predetermined chassis characteristic (chassis tuning), in particular damping and/or suspension, corresponding to the chip card, **characterized in that** on the chip card there are further stored data of an electronic driver's license and/or of an electronic vehicle registration certificate and/or of an electronic insurance certificate for a motor insurance, in particular liability insurance and/or motor own damage insurance.

2. The system according to claim 1, which has a plurality of chip cards with different operating parameters and/or program additions stored therein, one of which chip cards is selectively coupleable electrically to the control unit at a time.

3. The system according to claim 1 or 2, whereby the chip of the control unit has a volatile or non-volatile memory which is adapted for receiving and storing the operating data and/or program additions from the chip card, and which is further so adapted that the control program can access operating parameters and/or program additions deposited in the memory, for operating the engine and/or for tuning the chassis.

4. The system according to claim 3, which further has a first query device which is adapted to verify an authorization of the chip card, to operate with the chip card the control program with operating parameters and/or program additions already stored in the control unit, and, in dependence on the result of the verification,
- either, upon a positive result, to permit the operation of the control program with the operating parameters and/or program additions already stored in the control unit,
- or, upon a negative result, to ask for the making available of operating parameters and/or program additions through the chip card, whereby preferably in reaction to the negative result the operating parameters and/or program additions of the chip card are made available to the control program.

5. The system according to any of claims 1 to 4, whereby there are stored in the chip of the control unit a set of basic operating parameters and a complete control program, through which a basic engine power or basic chassis characteristic (tuning) is adjusted, and which makes possible an operation of the engine and/or of the chassis without a making available of operating parameters and/or program additions by means of the chip card.

6. The system according to claim 5, which further has a second query device which is adapted to verify an authorization of the chip card, to operate with the chip card the control program with the basic operating parameters and/or with the basic chassis characteristic, and, in dependence on the result of the verification,
- either, upon a positive result, to permit the operation of the control program with the basic operating parameters and/or the basic chassis characteristic,
- or, upon a negative result, to ask for the making available of operating parameters and/or program additions through the chip card, whereby preferably in reaction to the negative result the operating parameters and/or program additions of the chip card are made available to the control program.

7. The system according to any of claims 1 to 6, which is so adapted that the making available of the operating parameters and/or program additions of the chip card to the control program is effected directly by a coupling of the chip card to the chip of the control unit.

8. The system according to any of claims 1 to 7, whereby the chip card at the same time has the function of an electronic ignition key with which the engine is electronically started and/or an electronic anti-theft device is enabled.

9. The system according to any of claims 1 to 8, whereby the operating parameters and/or program additions are downloadable to the chip card, whereby an authentication is preferably necessary for the downloading.

10. The system according to any of claims 1 to 9, which further has an electronic tachograph which is so adapted that it detects and records every use of the automobile with the chip card, in particular the distance covered with employment of the chip card, whereby the use is preferably detected and recorded separately for each of the several chip cards, if applicable.

11. The system according to claim 10, which is adapted so that the terms of insurance, in particular the insurance premium, of at least one motor insurance are automatically ascertained in dependence on the operation of the control program with the operating parameters from the chip card, in particular in dependence on the distance so covered with the vehicle.

12. The system according to any of claims 1 to 11, whereby in the chip card there are further stored navigation parameters for a navigation system of the automobile, and whereby the control program and the navigation system are in operative connection with each other such that there is adjusted by the navigation parameters a spatial range of action of the automobile, corresponding to the chip card, which cannot be left with the automobile.

13. The system according to any of claims 1 to 12, whereby in the chip card there are further stored one or several adjusting parameters for at least one adjustment of functions of the automobile such as e.g. seat adjustment, steering wheel inclination, mirror position, radio station last set, adjustment of the air conditioner and maximum permissible speed, such that upon an initial operation of the automobile, in particular of the engine and/or of the control unit, the adjusting parameters are made available to the associated function together with the operating parameters and/or navigation parameters, if applicable.

14. The system according to any of claims 1 to 13, whereby the operating parameters and/or program additions stored on the chip card for the engine control and for the chassis characteristic (chassis tuning) are mutually coordinated, in particular such that when a higher engine power is adjusted a tighter chassis characteristic is adjusted.

15. The system according to any of claims 1 to 14, whereby the chip card or cards and/or the control unit or units of the system are so adapted that exclusively the chip card or cards and control unit or units belonging to the same system and/or to the same automobile are operable together, in particular that before or upon an initial operation of the system a unilateral or mutual authentication between the chip card and the control unit is effected wherein at least the chip card proves its authority for the control program of the system to be operated therewith.

16. A chip card in a system for function control, in particular engine control and/or chassis control, whereby the chip card is designed according to any of claims 1 to 15.

17. The chip card according to claim 16, whereby all necessary functionalities are implemented in the chip card as mutually separate applications, whereby the necessary functionalities have one or several of the following functionalities:
- operating parameters and/or program additions for the engine control,
- operating parameters and/or program additions for the chassis tuning, in particular damping and/or suspension,
- parameters and/or at least portions of a program for the actuation of an ignition and/or electronic anti-theft device of an automobile,
- at least portions of a query device for verifying the authorization of the chip card to access a control program in the control unit for the engine control of an automobile,
- authentication data and/or authentication methods for write accesses to the chip card for changing in particular operating data stored in the chip card,
- authentication data and/or authentication methods for the operation of the control program,
- recording data and/or parameters and/or at least portions of a program of an electronic tachograph,
- recording data and/or parameters and/or at least portions of a program of an electronic driver's license,
- recording data and/or parameters and/or at least portions of a program of an electronic vehicle registration certificate,
- recording data and/or parameters and/or at least portions of a program of an electronic insurance certificate for one or several motor insurances, in particular liability insurance and motor own damage insurance, in particular part comprehensive insurance or fully comprehensive insurance,
- navigation parameters for a navigation program of an automobile and/or at least portions of a navigation program of an automobile,
- one or several adjusting parameters for at least one adjustment of functions of an automobile such as e.g. seat adjustment, steering wheel inclination, mirror position, radio station last set, adjustment of the air conditioner and maximum permissible speed.

18. The chip card according to claim 16 or 17, whereby the chip card is a multi-application smart card, in particular a Java Card, whereby in particular the applications are designed as user applications or applets.

## Revendications

1. Système de commande de fonction, de commande du moteur et/ou de commande du train de roulement, dans un véhicule automobile, comprenant
- au moins un appareil de commande comprenant au moins une puce dans laquelle est implémenté au moins un programme de commande qui est configuré pour commander le moteur du véhicule automobile en utilisant des paramètres de fonctionnement et/ou pour commander les propriétés du train de roulement, notamment amortissement et/ou suspension, du véhicule automobile en utilisant des paramètres de fonctionnement, et
- une carte à puce dans laquelle sont mémorisés au moins une partie des paramètres de fonctionnement et/ou compléments de programme et qui peut être couplée électriquement à l'appareil de commande de manière à nouveau amovible, de telle façon que, à l'état couplé, la carte à puce met à la disposition du programme de commande les paramètres de fonctionnement et/ou compléments de programme qui sont mémorisés sur elle, de telle sorte que le programme de commande peut accéder aux paramètres de fonctionnement et/ou compléments de programme mis à disposition par la carte à puce,
une caractéristique de moteur prédéterminée correspondant à la carte à puce, notamment puissance de moteur, et/ou une caractéristique du train de roulement (syntonisation du train de roulement) prédéterminée correspondant à la carte à puce, notamment amortissement et/ou suspension, étant réglée avec le programme de commande et les paramètres de fonctionnement et/ou compléments de programme mis à disposition par la carte à puce, **caractérisé en ce que** des données d'un permis de conduire électronique et/ou d'une carte grise électronique et/ou d'une police d'assurance électronique pour une assurance automobile, notamment assurance responsabilité civile et/ou assurance casco, sont en outre mémorisées sur la carte à puce.

2. Système selon la revendication 1, qui comporte une pluralité de cartes à puce dans lesquelles sont mémorisés différents paramètres de fonctionnement et/ou compléments de programme et dont respectivement l'une d'entre elles au choix peut être couplée électriquement à l'appareil de commande.

3. Système selon la revendication 1 ou 2, la puce de l'appareil de commande comportant une mémoire volatile ou non volatile qui est configurée pour recevoir et mémoriser les données de fonctionnement et/ou les compléments de programme de la carte à puce et qui est en outre configurée de telle manière que le programme de commande peut, pour le fonctionnement du moteur et/ou pour la syntonisation du train de roulement, accéder à des paramètres de fonctionnement et/ou compléments de programme stockés dans la mémoire.

4. Système selon la revendication 3, qui comporte en outre un premier dispositif d'interrogation qui est configuré pour vérifier une autorisation de la carte à puce, pour faire fonctionner avec la carte à puce le programme de commande avec des paramètres de fonctionnement et/ou compléments de programme déjà mémorisés dans l'appareil de commande, et pour, en fonction du résultat de la vérification,
- soit, en cas de résultat positif, permettre le fonctionnement du programme de commande avec les paramètres de fonctionnement et/ou compléments de programme déjà mémorisés dans l'appareil de commande
- soit, en cas de résultat négatif, exiger la mise à disposition de paramètres de fonctionnement et/ou compléments de programme par la carte à puce, les paramètres de fonctionnement et/ou compléments de programme de la carte à puce étant de préférence en réaction au résultat négatif mis à disposition du programme de commande.

5. Système selon une des revendications de 1 à 4, un lot de paramètres fondamentaux de fonctionnement et un programme complet de commande étant mémorisés dans la puce de l'appareil de commande, par laquelle une puissance fondamentale de moteur ou bien caractéristique fondamentale du train de roulement (syntonisation du train de roulement) est réglée, et qui permet un fonctionnement du moteur et/ou du train de roulement sans une mise à disposition de paramètres de fonctionnement et/ou compléments de programme au moyen de la carte à puce.

6. Système selon la revendication 5, qui comporte en outre un second dispositif d'interrogation qui est configuré pour vérifier une autorisation de la carte à puce, pour faire fonctionner avec la carte à puce le programme de commande avec les paramètres fondamentaux de fonctionnement et/ou avec la caractéristique fondamentale du train de roulement, et pour, en fonction du résultat de la vérification,
- soit, en cas de résultat positif, permettre le fonctionnement du programme de commande avec les paramètres fondamentaux de fonctionnement et/ou la caractéristique fondamentale du train de roulement
- soit, en cas de résultat négatif, exiger la mise à disposition de paramètres de fonctionnement et/ou compléments de programme par la carte à puce, les paramètres de fonctionnement et/ou compléments de programme de la carte à puce étant de préférence en réaction au résultat négatif mis à disposition du programme de commande.

7. Système selon une des revendications de 1 à 6, qui est configuré de telle manière que, par un couplage de la carte à puce à la puce de l'appareil de commande, la mise des paramètres de fonctionnement et/ou compléments de programme de la carte à puce à la disposition du programme de commande est directement provoquée.

8. Système selon une des revendications de 1 à 7, la carte à puce ayant en même temps la fonction d'une clé électronique de contact avec laquelle le moteur est démarré électroniquement et/ou un dispositif électronique anti-démarrage est activé.

9. Système selon une des revendications de 1 à 8, les paramètres de fonctionnement et/ou compléments de programme pouvant être chargés après coup sur la carte à puce, une authentification étant de préférence nécessaire pour effectuer le chargement après coup.

10. Système selon une des revendications de 1 à 9, qui comporte en outre un tachygraphe électronique configuré de telle manière qu'il détecte et enregistre chaque utilisation du véhicule automobile avec la carte à puce, notamment la distance parcourue avec utilisation de la carte à puce, l'utilisation étant le cas échéant de préférence détectée et enregistrée séparément pour chacune des plusieurs cartes à puce.

11. Système selon la revendication 10, qui est configuré pour que les conditions d'assurance, notamment le contrat d'assurance, d'au moins une assurance automobile soit automatiquement identifiées en fonction du fonctionnement du programme de commande avec les paramètres de fonctionnement de la carte à puce, notamment en fonction du trajet parcouru en l'occurrence avec le véhicule.

12. Système selon une des revendications de 1 à 11, des paramètres de navigation pour un système de navigation du véhicule automobile étant en outre mémorisés dans la carte à puce, et le programme de commande et le système de navigation étant de telle sorte en liaison fonctionnelle l'un avec l'autre que, par les paramètres de navigation, une zone d'action spatiale du véhicule automobile correspondant à la carte à puce est réglée, le véhicule ne pouvant pas la quitter.

13. Système selon une des revendications de 1 à 12, un ou plusieurs paramètres de réglage concernant au moins un réglage de fonctions du véhicule automobile telles que p.ex. réglage du siège, inclinaison du volant, position du rétroviseur, chaîne de radio dernièrement sélectionnée, réglage de la climatisation et vitesse maximale autorisée étant en outre mémorisés dans la carte à puce de telle manière que, lors d'une mise en marche du véhicule automobile, notamment du moteur et/ou de l'appareil de commande, les paramètres de réglage sont mis conjointement avec les paramètres de fonctionnement et/ou le cas échéant avec les paramètres de navigation à la disposition de la fonction correspondante.

14. Système selon une des revendications de 1 à 13, les paramètres de fonctionnement et/ou compléments de programme pour la commande du moteur et pour la caractéristique du train de roulement (syntonisation du train de roulement) mémorisés sur la carte à puce étant accordés entre eux, notamment de telle façon que, quand une puissance de moteur plus élevée est réglée, une caractéristique du train de roulement plus ferme est réglée.

15. Système selon une des revendications de 1 à 14, la/les carte(s) à puce et/ou le/les appareil(s) de commande du système étant configurés pour qu'exclusivement la/les carte(s) à puce et appareil(s) de commande appartenant au même système et/ou au même véhicule automobile puissent fonctionner ensemble, notamment pour que, avant ou pendant une mise en marche du système, une authentification unilatérale ou réciproque entre la carte à puce et l'appareil de commande ait lieu, lors de laquelle au moins la carte à puce prouve son habilitation à ce que le programme de commande du système fonctionne avec elle.

16. Carte à puce dans un système de commande de fonction, notamment commande du moteur et/ou de commande du train de roulement, la carte à puce étant réalisée selon une des revendications de 1 à 15.

17. Carte à puce selon la revendication 16, toutes les fonctionnalités nécessaires étant implémentées en tant qu'applications distinctes les unes des autres dans la carte à puce, les fonctionnalités nécessaires comportant une ou plusieurs des fonctionnalités suivantes :
- paramètres de fonctionnement et/ou compléments de programme pour la commande du moteur,
- paramètres de fonctionnement et/ou compléments de programme pour la syntonisation du train de roulement, notamment amortissement et/ou suspension,
- paramètres et/ou au moins parties d'un programme pour l'actionnement d'un allumage et/ou d'un dispositif électronique anti-démarrage d'un véhicule automobile,
- au moins parties d'un dispositif d'interrogation pour vérifier l'autorisation de la carte à puce d'accéder à un programme de commande dans l'appareil de commande pour la commande du moteur d'un véhicule automobile,
- données d'authentification et/ou procédé d'authentification pour des accès en écriture sur la carte à puce pour la modification notamment de données de fonctionnement mémorisées dans la carte à puce,
- données d'authentification et/ou procédé d'authentification pour le fonctionnement du programme de commande,
- données d'enregistrement et/ou paramètres et/ou au moins parties d'un programme d'un tachygraphe électronique,
- données d'enregistrement et/ou paramètres et/ou au moins parties d'un programme d'une carte grise électronique,
- données d'enregistrement et/ou paramètres et/ou au moins parties d'un programme d'une police d'assurance électronique pour une ou plusieurs assurances automobiles, notamment assurance responsabilité civile et/ou assurance casco, notamment assurance casco partielle ou assurance casco complète,
- paramètres de navigation pour un programme de navigation d'un véhicule automobile et/ou au moins parties d'un programme de navigation d'un véhicule automobile,
- un ou plusieurs paramètres de réglage concernant au moins un réglage de fonctions d'un véhicule automobile telles que p.ex. réglage du siège, inclinaison du volant, position du rétroviseur, chaîne de radio dernièrement sélectionnée, réglage de la climatisation et vitesse maximale autorisée.

18. Carte à puce selon la revendication 16 ou 17, la carte à puce étant une smartcard multi-applications, notamment une carte Java, les applications étant notamment réalisées sous forme d'applications de type applet.
